# DEMANDE DE BREVET EUROPEEN

(11) **EP 2 187 642 A2**
(43) Date de publication de la demande: **19.05.2010**
(21) Numéro de dépôt: 09175758.3
(22) Date de dépôt: 12.11.2009
(51) Int. Cl.: H04N 7/26, H04N 7/01

(54) **Procédé pour élaborer un contenu multiformat sur un support numérique**

(30) Priorité: 13.11.2008 FR 0857677
(71) Demandeur: Wizard Images, 92100 Boulogne Billancourt (FR)
(72) Inventeur: Marillier, Denis, Sidney, 92100, BOULOGNE BILLANCOURT (FR); Danion, Gérard, 78410, LA FALAISE (FR)
(74) Mandataire: Pontet, Bernard

(57) **Abrégé**

L'invention concerne un procédé pour rendre disponible une séquence vidéo enregistrée sous un format vidéo professionnel ; dans lequel procédé on réalise les étapes suivantes :
a) acquisition de ladite séquence vidéo sous format numérique,
b) création d'un fichier numérique vidéo non compressé, dit fichier pivot, à partir de la séquence vidéo,
c) conversion du fichier pivot en une pluralité de fichiers numériques vidéo spécifiques qui sont respectivement encodés sous différents formats d'encodage, au moins l'un desdits fichiers numériques vidéo spécifiques est encodé sous un format de postproduction, et
d) stockage des fichiers numériques vidéo spécifiques dans un support mémoire numérique.

## Description

La présente invention est relative à un procédé pour rendre disponible au moins une séquence vidéo de qualité professionnelle à différents opérateurs utilisant chacun des moyens de lecture, des outils de postproduction (traitement du contenu) et des outils de diffusion différents. Elle trouve une application particulièrement intéressante dans le domaine de diffusion de séquences vidéos.

D'une façon générale, dans le domaine audiovisuel par exemple, la stratégie de communication pour la mise sur le marché d'un film se met en oeuvre environ six à huit mois auparavant selon les enjeux.

Typiquement, dans le cadre de l'édition DVD, un chef de projet marketing se voit attribuer des oeuvres audiovisuelles ou cinématographiques. Dans le cas de long-métrage, il peut travailler sur un titre encore en tournage, au stade de la postproduction ou bien au début de son exploitation en salles.

Plus le titre est important stratégiquement pour l'entreprise, plus le chef de projet devra informer et sensibiliser la force de vente au travers d'outils plus nombreux et riches afin de leur apporter le maximum d'arguments et d'outils de négociations dans leurs démarches commerciales.

A l'attribution du titre, le chef de projet reçoit l'un des tous premiers éléments disponibles dans la chaîne d'exploitation : une bande-annonce. Cette matière première lui permet de visionner et prendre connaissance du produit, l'analyser et le positionner. Il peut ainsi déterminer les acteurs et partenaires proches de la cible déterminée.

Actuellement, chacun de ces acteurs et intervenants, selon sa configuration technique interne et la tache confiée, a besoin d'être livré sur des supports spécifiques :
- pour la définition standard SD : Beta numérique, Beta SP, famille DV ( DVCam, DV Pro, DV C Pro), DVD, CD Rom, pour les plus utilisés, et aussi d'autres avec des normes moins exploitées ;
- pour la haute définition HD : Digital betacam, HDCam SR, HDCam, HDVCam, D5...

Cela nécessite la réalisation de nombreuses copies. Jointes à des documents promotionnels annexes ( Logos, marque de la société, visuels du produit : logo, Affiches, kakemono, plv, plan média...) livrés sur supports physiques ou envoyés par mail lorsque le poids des fichiers et la configuration mail l'autorisent, ces recopies permettent au chef de produit d'obtenir la visibilité voulue en fonction des médias requis ( Presse écrite : encartée ou non DVD, Radio, Télévision : spot publicitaire antenne, émissions TV, Internet, Téléphonie).

La multiplicité des partenaires, la démultiplication des supports, les spécificités techniques, la méconnaissance des techniques et prestations audiovisuelles, l'urgence des demandes, la logistique, la maîtrise budgétaire sont autant de contraintes qui se révèlent très lourdes et engendrent de nombreuses erreurs de copies et/ou de livraison d'un mauvais matériel.

Le problème technique identifié dans l'art antérieur est le risque d'erreurs lors de la copie de la séquence vidéo originale. Ces erreurs peuvent être dues :
- à des défauts mécaniques du support, ou
- à des défauts physiques de recopies ou de traitements numériques.

Ces erreurs se traduisent par des pixellisations et/ou décrochements image, scratchs ou trous de son, macro blocs, saccades, scintillements...

La présente invention a pour but de remédier aux inconvénients précités en proposant un nouveau procédé de centralisation des opérations. Un autre but de l'invention est d'accélérer les copies des séquences vidéo tout en maintenant une haute qualité à moindre coût.

On atteint au moins l'un des buts précités avec un procédé pour rendre disponible une séquence vidéo enregistrée sous un format vidéo professionnel ; dans lequel procédé on réalise les étapes suivantes :
a) acquisition de ladite séquence vidéo sous forme de fichier numérique,
b) création d'un fichier numérique vidéo non compressé, dit fichier pivot, à partir de la séquence vidéo,
c) conversion du fichier pivot en une pluralité de fichiers numériques vidéo spécifiques qui sont respectivement encodés sous différents formats d'encodage, au moins l'un desdits fichiers numériques vidéo spécifiques est encodé sous un format de postproduction, et
d) stockage des fichiers numériques vidéo spécifiques dans un support mémoire numérique.

De préférence, le fichier pivot fait également partie des fichiers stockés au sein du support mémoire numérique. L'étape a) d'acquisition peut consister en la capture à la volée d'une séquence vidéo.

De préférence, le fichier de postproduction est un fichier non compressé qui est le plus fidèle possible à l'original. Il peut être à la norme AVI, MOV,...

Avec le procédé selon l'invention, on utilise un fichier pivot qui permet de conserver la haute qualité de la séquence vidéo originale. La solution technique proposée par la présente invention permet d'obtenir sur un seul support une séquence vidéo de grande qualité pour l'ensemble des formats d'encodage disponibles. Chaque acteur accédant au support mémoire numérique peut y trouver un ou plusieurs fichiers compatibles selon la tâche qui lui est confiée : visionnage, postproduction, scénarisation DVD, Internet, téléphonie. La séquence vidéo est donc directement exploitable. L'invention procure un gain de temps et une économie financière non négligeable.

Selon une caractéristique avantageuse de l'invention, l'étape d'acquisition consiste en la lecture d'une cassette vidéo professionnelle. Cette cassette vidéo professionnelle peut être au format SD ou HD : Digital betacam, HDCam SR, HDCam, HDVCam, D5,...

De préférence, notamment pour le SD (définition standard) le fichier pivot est un fichier numérique vidéo encodé sous un format AVI ou MOV qui est un format non compressé permettant ainsi de conserver la qualité de la séquence vidéo. En fait, quelque soit la norme de la séquence vidéo à acquérir, on génère toujours un fichier pivot non compressé qui est selon une norme prédéfinie. Cette norme peut donc être AVI, MOV, ou autre en ce qui concerne plus particulièrement des séquences HD (haute définition). Cette norme prédéfini est notamment fonction de la carte électronique d'acquisition utilisée.

Avantageusement, le support mémoire numérique peut comprendre un support portable tel que par exemple :
- un disque de type DVD (DVD vidéo SD ou HD, ou DVDROM) ;
- un DVD hybride vidéo/ROM, la partie vidéo renfermant la séquence vidéo sous un format lisible par un lecteur DVD de salon, et la partie ROM renfermant les fichiers numériques lisibles par un lecteur DVDROM ;
- une clé USB ; et/ou
- un disque dur portable.

Par ailleurs, le support mémoire numérique peut également comprendre un espace mémoire au sein d'un serveur accessible par FTP.

Avantageusement, les fichiers numériques vidéo spécifiques peuvent comprendre au moins des fichiers pour le visionnage, pour toute prestation de postproduction, pour la scénarisation DVD, l'intégration pour accès et diffusion Internet, et le réseau téléphonique mobile. Par conséquent pour aider au mieux l'utilisateur accédant au support mémoire numérique, ce dernier peut avoir une arborescence développée par type d'utilisation des fichiers : visionnage, diffusion, postproduction, Internet/Intranet, téléphonie mobile, radio, dossier marketing....

Selon une caractéristique avantageuse de l'invention, les fichiers numériques vidéo spécifiques peuvent comprendre :
- des fichiers aux formats WINDOWS MEDIA ®, FLV®, Quicktime®, Real® et MPEG4® ;
- des fichiers destinés à la postproduction aux formats MPEG-2, DV, AVI, MOV et séquence d'images non compressées de type TIF associée éventuellement à un fichier WAV ;
- des fichiers destinés au visionnage vidéo aux formats MPEG-2 et MPEG-1 ; et/ou
- des fichiers destinés à la diffusion vidéo haute définition aux formats MPEG-2, AVC et MPEG4.

A titre d'exemple, lors de l'étape de la conversion, le fichier pivot peut être encodé en au moins vingt-cinq formats vidéo numérique différents.

Selon un mode de réalisation avantageux de l'invention, on applique également les étapes a, b, c et d à une séquence audio de façon à créer un fichier pivot audio, convertir ce fichier pivot audio en une pluralité de fichiers numériques audio spécifiques sous différents formats d'encodage, et stocker ces fichiers numériques audio spécifiques dans le support mémoire numérique. Dans ce cas, les fichiers numériques audio spécifiques peuvent comprendre des fichiers aux formats AIFF, WAV et MP3. Et on peut utiliser comme fichier pivot audio un fichier au format AIFF ou WAV.

Avantageusement, on stocke en outre dans le support mémoire numérique des fichiers visuels numériques, des fichiers textes, des fichiers tableaux, et des fichiers multimédia tels que des pages web. Les fichiers multimédia peuvent être tout type de fichier informatique tel que des pages Web, des fichiers textes, des fichiers exécutables (application), des animations graphiques,...

Avec le procédé selon l'invention, l'utilisateur peut :
- visionner et faire visionner son support de communication vidéo quelque soit l'installation dont il dispose, cette installation comportant notamment un lecteur DVD (de salon ou d'ordinateur) ou un accès réseau ;
- fournir à tous ses partenaires et prestataires techniques dans un format directement exploitable le matériel de base nécessaire à tout travail demandé ;
- livrer des médias diffuseurs (TV, radio, Internet) en qualité « broadcast », leur permettant, soit une intégration du contenu avec ou sans modification, soit de monter des sujets diffusés lors d'émissions ou magazines ;
- envoyer un seul support ou un seul lien à des journalistes leur permettant de trouver tous les outils de promotion.

Selon un mode de mise en oeuvre avantageux de l'invention, à l'étape b), le fichier pivot est sauvegardé dans un serveur qui est sondé en permanence par une pluralité d'unités de traitement disposées en réseau, chaque unité de traitement étant en charge au moins d'un format d'encodage à l'étape c) de conversion, les fichiers numériques spécifiques sont ensuite regroupés au sein d'un serveur de projet en vu d'un stockage selon l'étape d).

D'autres avantages et caractéristiques de l'invention apparaîtront à l'examen de la description détaillée d'un mode de mise en oeuvre nullement limitatif, et des dessins annexés, sur lesquels :
La figure 1 est une vue générale illustrant les étapes d'acquisition, de conversion et de centralisation ;
La figure 2 est une vue générale illustrant les étapes de vérification, finalisation et de logistique et
La figure 3 est un diagramme de production reprenant l'ensemble des étapes des figures 1 et 2.

Bien que l'invention n'y soit pas limitée, on va maintenant décrire le procédé selon l'invention pour la mise en support DVD (support physique) et FTP (dématérialisé) de fichiers vidéo, audio, images, textes et pages web relatifs à une campagne de communication.

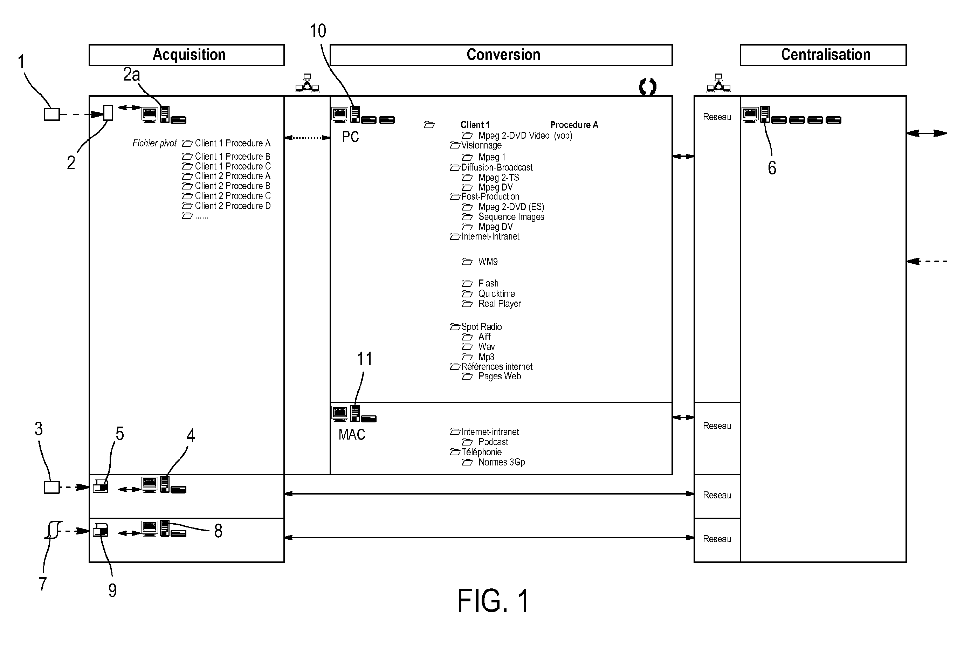

Sur la figure 1, on voit que le procédé selon l'invention comprend une étape d'acquisition, de conversion et de centralisation.

Au cours de l'étape d'acquisition, on souhaite intégrer un contenu vidéo dont l'original se trouve dans une cassette vidéo professionnelle telle que le Betacam numérique ou le Betacam SP. Il est tout à fait possible d'acquérir un contenu vidéo depuis d'autres sources vidéo telles que DV-Cam, DVC-Pro, P2, D1, HD-cam,...ou d'autres sources informatiques. On peut aussi prévoir plusieurs sources lectrices disposées en parallèle en fonction du support dans lequel le contenu vidéo à acquérir est stocké.

Cette étape permet de transformer la cassette vidéo 1 en un fichier numérique encodé sans compression au format AVI. Ce fichier porte le nom « fichier pivot ». Pour ce faire, on utilise une station d'acquisition vidéo 2 associée à un serveur d'acquisition 2a. Plusieurs technologies sont possibles telles que par exemple une station Digital Rapids de la gamme StreamZ.

En ce qui concerne le fichier pivot, on saisit des indicateurs temporels (« timecode ») de début et de fin et on saisit le format de l'image et son standard de diffusion. De préférence, on spécifie avec précision un chemin logique de l'écriture du fichier encodé. A titre d'exemple, les fichiers sont rangés dans des dossiers par type de client et par type de procédure demandée par le client. Une procédure correspond en fait à chaque commande d'un client :

### d:/Encodage AVI/Nom du Client/Nom de la procedure/

Sur la figure 1, pour chaque client et pour chaque procédure d'un client, on crée un fichier pivot au format AVI :
client 1 procédure A ;
client 1 procédure B ;
client 1 procédure C ;
client 2 procédure A ;
client 2 procédure B ;
client 2 procédure C ;
client 2 procédure D ;

De la même manière, on acquière des fichiers pivots audio au format AIFF ou WAV.

Par ailleurs, on prévoit l'acquisition de diapositives 3 au moyen d'un Pc 4 équipé d'un scanner diapositives 5 avec chargeur, du type Nikon SF-210 par exemple. Les diapositives sont chargées pour faire une acquisition automatique, à la vitesse de trois diapositives par minute maximum. Le format d'acquisition standard est du Tiff à 300 DPI.

Le chemin logique de l'écriture du fichier numérisé est spécifié avec précision de façon à pointer un serveur de centralisation 6.

On prévoit également l'acquisition des supports papiers ou photos 7 au moyen d'un Pc 8 équipé d'un scanner 9 avec chargeur, du type HP Scanjet série 5590 avec chargeur.

Ces documents sont chargés pour faire une acquisition automatique, à la vitesse de quatre pages par minute maximum. Le format d'acquisition standard est du PDF à 200 DPI. Ici également, le chemin logique de l'écriture du fichier numérisé est spécifié avec précision de façon à pointer le serveur de centralisation 6.

Selon l'invention, après les opérations d'acquisitions, les fichiers pivots sont ensuite déclinés en une multitude de fichiers avec des formats différents. Les opérations de conversion sont réalisées par un microordinateur 10 PC et un microordinateur 11 de type Macintosh qui sont disposés en réseau avec le PC 2 d'acquisition. Avantageusement, les deux microordinateurs 10 et 11 sondent en permanence le PC 2 via le réseau de façon à détecter de nouveaux fichiers pivots : les dossiers de PC 2 sont sondés cycliquement. Ces microordinateurs sont paramétrés de façon à convertir chaque fichier pivot selon des caractéristiques prédéfinis.

Lors du sondage, lorsqu'un fichier pivot est détecté, c'est le nom du dossier dans lequel ce fichier détecté se trouve qui déclenche les opérations de conversion à mener.

Sur la figure 1 par exemple, le PC 10 de conversion est apte à convertir un fichier pivot au format AVI en différents fichiers vidéo :
Un fichier au format MPEG-2 multiplexé, avec l'extension « .vob »,
Pour le visionnage : un fichier MPEG-1,
Pour la diffusion (« broadcast ») : des fichiers aux formats MPEG 2, DV,
Pour la postproduction : des fichiers aux formats MPEG-2 en flux élémentaires c'est-à-dire en fichiers séparés (parfois nommé « ES » pour « elementary stream » en anglais), séquence images et DV,
Pour Internet et Intranet : des fichiers aux formats actuels ainsi que leurs évolutions futures ; ces formats peuvent être par exemple et de façon non limitative : Div'X®, Windows Media®, Flash®, QuickTime®, Real Player®.
En ce qui concerne les fichiers pivots audio, ils sont convertis, principalement pour des spots radio en fichiers aux formats Aiff, Wav et Mp3.

Pour être exhaustif et assurer une conversion de qualité, certains fichiers sont convertis sur le microordinateur Macintosh 11 : il s'agit de fichier au format « podcast » pour Internet et Intranet et la compatibilité avec des terminaux tels que Ipod® et Iphone®, et des fichiers pour la téléphonie mobile, par exemple 3G, 4G, edge,...

A titre d'exemple non limitatif, voici un ensemble de paramètres d'un fichier au format DV converti à partir du fichier pivot au format AVI :
Nom du fichier (utilisation du nom de la source)
○ FA_DV_720x576_169_Pal.dv
Chemin d'enregistrement pour le fichier converti
○ T:/../ClientlProcedureA Centralisé/Dossier cible converti
Profil
○ DV PAL
entrelacement (« Interlacing »)
○ Automatique
Aspect Ratio
○ As Source
Encoder (Codec)
○ Microsoft DV PAL
Standard Vidéo
○ Pal
Audio Utilisé
○ Source
○ Canal Stéréo
○ taux d'échantillonnage 48.000 Khz
○ Bits / Echantillonnage 16

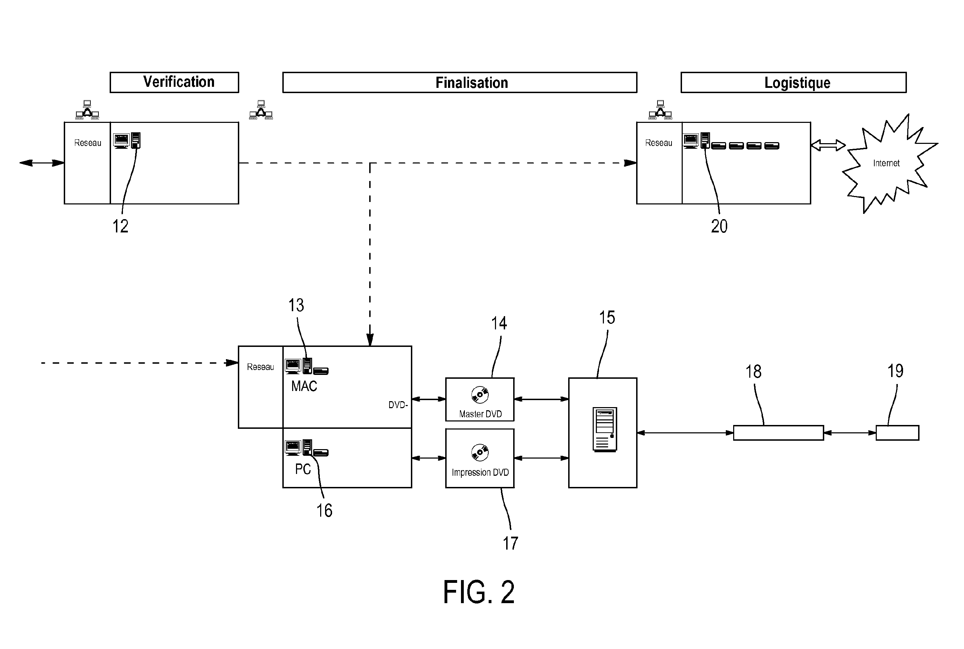

Chaque fichier converti est ensuite transmis ver le serveur de centralisation 6 qui a pour fonction de centraliser l'ensemble des fichiers pour un client donné et pour une procédure donnée et de les dispatcher ensuite vers des moyens de support différents. On prévoit une ou des stations de vérification 12, sur la figure 2, qui est relié au serveur de centralisation 6 via le réseau et qui permet à des utilisateurs de vérifier la qualité des travaux réalisés.

Sur la figure 2, l'étape de finalisation consiste en la réalisation physique d'un support DVD Hybride : « masterisation ». Celui-ci est constitué d'une partie DVD Rom contenant les fichiers commandés par le client 1, ainsi qu'une seconde partie DVD Vidéo permettant au produit d'être visionné sur une platine de salon ou sur un ordinateur compatible DVD Vidéo.

La réalisation de celui-ci est effectuée sur un Macintosh équipé d'un logiciel adéquat tel que par exemple le DVD Studio Pro 4. Le premier support réalisé est un « master » 14 qui va servir à la duplication sur des tours de gravure autonomes 15.

Ces unités sont autonomes et ne nécessitent pas de station informatique (PC, Mac...)

D'autre part, on utilise un PC 16 afin de réaliser une impression 17 sur la face du « master ». Les copies du « master » 14 sont ensuite conditionnées en 18 puis envoyés en 19.

Par ailleurs, après vérification, le cas échéant, tout ou partie des fichiers pour un client donné sont stockés au sein d'un serveur FTP 20 de sorte que ces fichiers sont accessibles à tout moment, via Internet et de préférence de façon sécurisée.

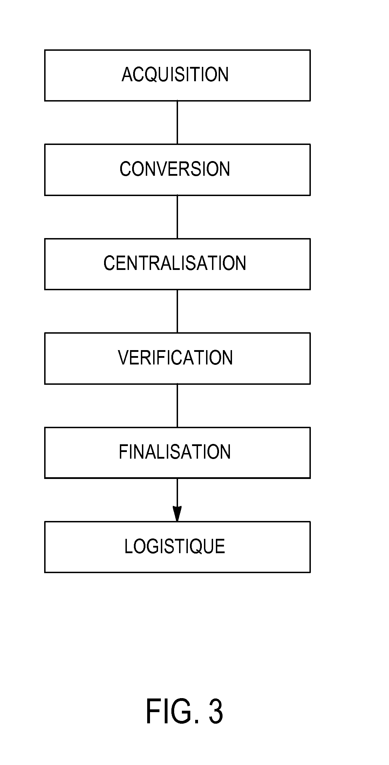

Sur la figure 3, on voit l'ensemble des étapes décrites ci-dessus sur les figures 1 et 2. L'étape d'acquisition permet de générer le fichier pivot qui est décliné en plusieurs formats lors de l'étape de conversion. Au cours de l'étape de centralisation, on centralise l'ensemble des fichiers provenant de différentes sources. L'étape de vérification peut faire intervenir un ou plusieurs opérateurs ayant des terminaux de vérification. L'étape de finalisation comprend l'écriture des fichiers de différents formats dans des supports tels que des DVD par exemple. Enfin, l'étape dite de logistique concerne la mise à disposition des fichiers sous forme de support physique ou sous forme de fichiers accessibles en ligne via un serveur FTP par exemple.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour rendre disponible une séquence vidéo enregistrée sous un format vidéo professionnel ; dans lequel procédé on réalise les étapes suivantes :
a) acquisition de ladite séquence vidéo sous forme de fichier numérique,
b) création d'un fichier numérique vidéo non compressé, dit fichier pivot, à partir de la séquence vidéo,
c) conversion du fichier pivot en une pluralité de fichiers numériques vidéo spécifiques qui sont respectivement encodés sous différents formats d'encodage, au moins l'un desdits fichiers numériques vidéo spécifiques est encodé sous un format de postproduction, et
d) stockage des fichiers numériques vidéo spécifiques dans un support mémoire numérique,
**caractérisé en ce que** le support mémoire numérique comprend un DVD hybride vidéo/ROM, la partie vidéo renfermant la séquence vidéo sous un format lisible par un lecteur DVD de salon, et la partie ROM renfermant les fichiers numériques lisibles par un lecteur DVDROM.

2. Procédé selon la revendication 1, **caractérisé en ce que** l'étape d'acquisition consiste en la lecture d'une cassette vidéo professionnelle.

3. Procédé selon la revendication 1 ou 2, **caractérisé en ce que** le fichier pivot est un fichier numérique vidéo encodé sous un format AVI ou MOV.

4. Procédé selon l'une quelconque des revendications 1 à 3, **caractérisé en ce que** le support mémoire numérique comprend en outre une clé USB.

5. Procédé selon l'une quelconque des revendications 1 à 4, **caractérisé en ce que** le support mémoire numérique comprend en outre un disque dur portable.

6. Procédé selon l'une quelconque des revendications précédentes, **caractérisé en ce que** les fichiers numériques vidéo spécifiques comprennent au moins des fichiers pour le visionnage, pour toute prestation de postproduction, pour la scénarisation DVD, l'intégration pour accès et diffusion Internet, et le réseau téléphonique mobile.

7. Procédé selon l'une quelconque des revendications précédentes, **caractérisé en ce que** les fichiers numériques vidéo spécifiques comprennent des fichiers aux formats Div'X®, Windows Media®, FLV®, Quicktime®, Real® et MPEG4®.

8. Procédé selon l'une quelconque des revendications précédentes, **caractérisé en ce que** les fichiers numériques vidéo spécifiques comprennent des fichiers destinés à la postproduction aux formats MPEG-2, AVI, MOV, DV, et séquence image non compressée TIF associée à un fichier WAV.

9. Procédé selon l'une quelconque des revendications précédentes, **caractérisé en ce que** les fichiers numériques vidéo spécifiques comprennent des fichiers destinés au visionnage vidéo aux formats MPEG-2 et MPEG-1.

10. Procédé selon l'une quelconque des revendications précédentes, **caractérisé en ce que** les fichiers numériques vidéo spécifiques comprennent des fichiers destinés à la diffusion vidéo haute définition aux formats MPEG-2, AVC et MPEG4.

11. Procédé selon l'une quelconque des revendications précédentes, **caractérisé en ce que** lors de l'étape de la conversion, le fichier pivot est encodé en au moins vingt-cinq formats vidéo numérique différents.

12. Procédé selon l'une quelconque des revendications précédentes, **caractérisé en ce que** le support mémoire numérique comprend un espace mémoire au sein d'un serveur accessible par FTP.

13. Procédé selon l'une quelconque des revendications précédentes, **caractérisé en ce qu'**on applique également les étapes a, b, c et d à une séquence audio de façon à créer un fichier pivot audio, convertir ce fichier pivot audio en une pluralité de fichiers numériques audio spécifiques sous différents formats d'encodage, et stocker ces fichiers numériques audio spécifiques dans le support mémoire numérique.

14. Procédé selon la revendication 13, **caractérisé en ce que** les fichiers numériques audio spécifiques comprennent des fichiers aux formats AIFF, WAV et MP3.

15. Procédé selon la revendication 8 ou 9, **caractérisé en ce que** le fichier pivot audio est au format AIFF ou WAV.

16. Procédé selon l'une quelconque des revendications précédentes, **caractérisé en ce qu'**on stocke en outre dans le support mémoire numérique des fichiers visuels numériques.

17. Procédé selon l'une quelconque des revendications précédentes, **caractérisé en ce qu'**on stocke en outre dans le support mémoire numérique des fichiers multimédia tels que des pages web.

18. Procédé selon l'une quelconque des revendications précédentes, **caractérisé en ce qu'**à l'étape b), le fichier pivot est sauvegardé dans un serveur qui est sondé en permanence par une pluralité d'unités de traitement disposées en réseau, chaque unité de traitement étant en charge au moins d'un format d'encodage à l'étape c) de conversion, les fichiers numériques spécifiques sont ensuite regroupés au sein d'un serveur de projet en vu d'un stockage selon l'étape d).

19. Procédé selon l'une quelconque des revendications précédentes, **caractérisé en ce que** l'étape a) d'acquisition consiste en la capture à la volée d'une séquence vidéo.

20. Support numérique de type DVD hybride obtenu par la mise en oeuvre du procédé selon la revendication 1.
